# EUROPÄISCHE PATENTANMELDUNG

(11) **EP 4 831 460 A1**
(43) Veröffentlichungstag der Anmeldung: **28.10.2026**
(21) Anmeldenummer: 26171587.4
(22) Anmeldetag: 10.04.2026
(51) Int. Cl.: F01P 3/20, B60K 11/02, F01P 7/16

(54) **KRAFTFAHRZEUG MIT KÜHLSYSTEM**

(30) Priorität: 24.04.2025 DE 102025115840
(71) Anmelder: Volkswagen Aktiengesellschaft, 38440 Wolfsburg (DE)
(72) Erfinder: Diedrich, Mathias, 38440 Wolfsburg (DE)

(57) **Zusammenfassung**

Kraftfahrzeug (1) mit einem Kühlsystem (2), wobei das Kraftfahrzeug (1) eine Antriebsachse (3), eine Verbrennungskraftmaschine (4), eine erste Traktionsmaschine (5) und eine Traktionsbatterie (6) aufweist, wobei das Kühlsystem (2) einen ersten Kühlkreislauf (7) mit einer ersten Pumpe (8), einen zweiten Kühlkreislauf (9) mit einer zweiten Pumpe (10) und einen dritten Kühlkreislauf (11) mit einer dritten Pumpe (12) aufweist; wobei durch jede Pumpe (8, 10, 12) ein Kühlmittel (13) durch den jeweiligen Kühlkreislauf (7, 9, 11) beförderbar ist; wobei in dem ersten Kühlkreislauf (7) zumindest ein erster Wärmetauscher (14) und die Verbrennungskraftmaschine (4), in dem zweiten Kühlkreislauf (9) zumindest ein zweiter Wärmetauscher (15) und die erste Traktionsmaschine (5) und in dem dritten Kühlkreislauf (11) ein dritter Wärmetauscher (16) und die Traktionsbatterie (6) angeordnet sind, wobei der erste Kühlkreislauf (7) und der zweite Kühlkreislauf (9) einen gemeinsamen ersten Ausgleichsbehälter (17) aufweisen.

## Beschreibung

Die Erfindung betrifft ein Kraftfahrzeug mit einem Kühlsystem. Das Kühlsystem umfasst einen ersten Kühlkreislauf, einen zweiten Kühlkreislauf und einen dritten Kühlkreislauf, die jeweils von einem Fluid (einem Kühlmittel, insbesondere einer Kühlflüssigkeit, z. B. Wasser oder Wasser mit Additiven) durchströmbar sind. Das Kühlsystem ist insbesondere zur Temperierung von Komponenten eines Kraftfahrzeuges vorgesehen.

Die Erfindung betrifft ein Hybridfahrzeug (HEV), d. h. ein Kraftfahrzeug, das neben einer Verbrennungskraftmaschine auch mindestens eine elektrische Traktionsmaschine umfasst. Das Hybridfahrzeug kann insbesondere oder eben gerade nicht als Plug-in Hybridfahrzeug (PHEV) ausgebildet sein. Bei einem PHEV kann eine Traktionsbatterie, die zur Versorgung der Traktionsmaschine mit elektrischer Leistung vorgesehen ist, nicht nur im Fahrbetrieb des Kraftfahrzeugs durch insbesondere einen Generatorbetrieb der Traktionsmaschine, sondern zusätzlich auch durch ein Anschließen an eine externe elektrische Energieversorgung, z. B. eine Ladestation, geladen werden. Wenn das Hybridfahrzeug nicht als PHEV ausgeführt ist, wird die Traktionsbatterie ausschließlich durch die als Generator betriebenen Traktionsmaschine oder durch Rekuperation geladen.

Bei einem Hybridfahrzeug müssen neben den Komponenten, die aus einem nur von einer Verbrennungskraftmaschine angetriebenen Kraftfahrzeug bekannt sind, z. B. die Verbrennungskraftmaschine etc., auch die elektrischen Antriebskomponenten, d. h. insbesondere eine elektrischer Traktionsmaschine, eine diesem zugeordnete Leistungselektronik sowie die Traktionsbatterie temperiert bzw. gekühlt werden.

Gerade bei Hybridfahrzeugen wird ein solches Kühlsystem nicht nur zur Kühlung, sondern auch zumindest zeitweise auch für ein Erwärmen von Komponenten des Kraftfahrzeugs, d. h. für eine funktionale Übertragung von Wärmeenergie auf diese Komponenten, genutzt. Dies gilt insbesondere für Komponenten wie einen Heizungswärmetauscher, die Verbrennungskraftmaschine und die Traktionsbatterie. Für die Verbrennungskraftmaschine kann dadurch insbesondere ein möglichst schnelles Erwärmen bis zu einem hinsichtlich des Wirkungsgrads und der Schadstoffemissionen vorteilhaften Betriebstemperaturbereich angestrebt werden. Für die Traktionsbatterie ist die möglichst dauerhafte Temperierung innerhalb eines definierten Temperaturbereichs dagegen vorteilhaft für die Leistungsfähigkeit und die Lebensdauer.

In einem Kraftfahrzeug können mehrere Kühlkreisläufe vorgesehen sein. So ist es bekannt, einen Hochtemperaturkühlkreislauf, der für die Kühlung insbesondere der Verbrennungskraftmaschine sowie weiterer Komponenten vorgesehen ist und dessen Betriebstemperatur im Normalbetrieb des Kraftfahrzeugs höher als 90°C [Grad Celsius] liegen kann, sowie mindestens einen Niedertemperaturkühlkreislauf, dessen Betriebstemperatur im Normalbetrieb 90°C nicht überschreiten soll, vorzusehen.

Für eine gute und insbesondere effiziente Kühlleistung eines Kühlkreislaufs ist es relevant, dass dieser möglichst vollständig entlüftet ist. Demnach muss zum einen während des Befüllvorgangs des Kühlkreislaufs, insbesondere bei einer Erstbefüllung oder einer Neubefüllung im Rahmen einer Wartung, die im Kühlkreislauf enthaltene Luft, die von dem einströmenden Kühlmittel verdrängt wird, möglichst vollständig abgeführt werden. Zudem kann im Betrieb des Kraftfahrzeugs und damit des Kühlkreislaufs Gas durch Verdampfungsprozesse entstehen, das sicher abgeführt werden sollte. Ein kontrolliertes Sieden kann die Wärmestromdichte erhöhen, wobei deshalb eine solche Art von Sieden bei der Kühlkreislaufauslegung erlaubt ist. Die entstehenden Dampfblasen sollten entsprechend abgeführt werden.

Aus der DE 10 2019 120 332 A1 ist ein Kühlsystem bekannt, dass einen ersten Kühlkreislauf und einen zweiten Kühlkreislauf aufweist, die von einem Fluid (einem Kühlmittel, z. B. Wasser oder Wasser mit Additiven) durchströmbar sind. Der erste Kühlkreislauf ist über eine erste Befüllleitung und zumindest eine erste Entlüftungsleitung mit einem Ausgleichsbehälter fluidtechnisch verbindbar bzw. verbunden und der zweite Kühlkreislauf nur über eine zweite Entlüftungsleitung (direkt) mit dem Ausgleichsbehälter fluidtechnisch verbindbar bzw. verbunden.

Die DE 10 2020 206 674 A1 ist auf Hybridfahrzeug mit einem Kühlsystem gerichtet. Das Hybridfahrzeug kann auch als Plug-in Hybridfahrzeug ausgebildet sein. Das Kühlsystem weist ein Verteilsystem für das Kühlmittel auf.

Die DE 10 2022 102 759 A1 ist auf ein Kühlsystem gerichtet, das eine besonders geeignet ausgeführte Einrichtung zum Entlüften aufweist.

Aufgabe der vorliegenden Erfindung ist es, die mit Bezug auf den Stand der Technik angeführten Probleme zumindest teilweise zu lösen. Insbesondere soll ein Kühlsystem angegeben werden, das möglichst einfach aufgebaut ist, wobei ein Überströmen von Kühlmittel aus einem Kühlkreislauf in den anderen Kühlkreislauf möglichst ausgeschlossen ist.

Zur Lösung dieser Aufgaben trägt ein Kühlsystem mit den Merkmalen gemäß Patentanspruch 1 bei. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und/oder Details aus den Figuren ergänzt werden, wobei weitere Ausführungsvarianten der Erfindung aufgezeigt werden.

Es wird ein Kraftfahrzeug mit einem Kühlsystem vorgeschlagen, wobei das Kraftfahrzeug eine Antriebsachse (also eine von einer Verbrennungskraftmaschine oder einer Traktionsmaschine angetriebene Achse), eine Verbrennungskraftmaschine, eine erste Traktionsmaschine und eine Traktionsbatterie aufweist. Das Kühlsystem weist einen ersten Kühlkreislauf mit einer ersten Pumpe, einen zweiten Kühlkreislauf mit einer zweiten Pumpe und einen dritten Kühlkreislauf mit einer dritten Pumpe auf. Durch jede Pumpe ist ein Kühlmittel durch den jeweiligen Kühlkreislauf beförderbar. In dem ersten Kühlkreislauf sind zumindest ein erster Wärmetauscher und die Verbrennungskraftmaschine, in dem zweiten Kühlkreislauf zumindest ein zweiter Wärmetauscher und die erste Traktionsmaschine und in dem dritten Kühlkreislauf ein dritter Wärmetauscher und die Traktionsbatterie angeordnet (d. h. diese Komponenten werden von dem Kühlmittel zur Zuführung oder Abführung von Wärme beaufschlagt). Der erste Kühlkreislauf und der zweite Kühlkreislauf weisen einen gemeinsamen ersten Ausgleichsbehälter auf. Der erste Kühlkreislauf ist über eine erste Rücklaufleitung und eine erste Vorlaufleitung und der zweite Kühlkreislauf nur über eine zweite Rücklaufleitung mit dem ersten Ausgleichsbehälter verbunden.

Das Kraftfahrzeug ist insbesondere ein Hybridfahrzeug (HEV), d. h. ein Kraftfahrzeug, das neben einer Verbrennungskraftmaschine auch mindestens einen elektrischen Traktionsmotor umfasst. Das Hybridfahrzeug kann insbesondere oder eben gerade nicht als Plug-in Hybridfahrzeug (PHEV) ausgebildet sein.

Die Bezeichnung des Kühlsystems und der dazugehörigen Komponenten mit dem Begriff "kühl" beruht auf der primären Funktion des Kühlsystems zur Kühlung von Komponenten des Kraftfahrzeugs. Dies schließt nicht aus, dass mittels des Kühlsystems auch eine Aufwärmfunktionalität und folglich grundsätzlich ein Temperieren von Komponenten des Kraftfahrzeugs umgesetzt wird.

Die einzelnen zu kühlenden bzw. zu temperierenden Komponenten des Kühlsystems sind in besonders vorteilhafter Weise auf die Kühlkreisläufe verteilt. Die besondere Verteilung der Komponenten ermöglich z. B. die schnelle Bereitstellung einer Heizleistung für einen Innenraum des Kraftfahrzeuges, z. B. wenn (nur) ein Heizungswärmetauscher in dem ersten Kühlkreislauf angeordnet ist, so dass die von dem Kühlmittel in der Verbrennungskraftmaschine aufgenommene Wärme direkt an den (unmittelbar stromabwärts der Verbrennungskraftmaschine angeordneten) Heizungswärmetauscher abgegeben werden kann, bevor das Kühlmittel in dem ersten Wärmetauscher wieder abgekühlt wird.

Insbesondere sind der erste Kühlkreislauf als ein Hochtemperaturkreislauf und der zweite (wie auch der dritte) Kühlkreislauf als Niedertemperaturkreislauf (siehe vorstehende Definition) ausgeführt.

In dem ersten Kühlkreislauf ist insbesondere die Verbrennungskraftmaschine angeordnet, d. h. das Kühlmittel beaufschlagt zumindest den Zylinderkopf, ein Zylindergehäuse, bevorzugt auch einen Motorölkühler und einen Abgaskühler.

Die erste Pumpe ist insbesondere mit der Verbrennungskraftmaschine gekoppelt und wird von dieser (direkt) angetrieben, ist also keine elektrisch betriebene Pumpe.

Als "Wärmetauscher" wird insbesondere eine Komponente des Kühlsystems verstanden, die ausschließlich oder primär einer Übertragung von Wärmeenergie von dem Kühlmittel auf (Umgebungs-)Luft, die diesen Wärmetauscher ebenfalls um- und/oder durchströmt, dient.

Als "Traktionsmaschine" wird insbesondere eine elektrische Maschine bezeichnet, die ein auf die Antriebsachse übertragbares Drehmoment erzeugt. Die Traktionsmaschine weist insbesondere eine Leistung von zwischen 20 und 500 Kilowatt auf.

Als "Traktionsbatterie" wird insbesondere eine Speichereinheit für elektrische Energie bezeichnet, die die Energie für den Betrieb der Traktionsmaschine bereitstellt bzw. die im Rekuperationsbetrieb die Energie aufnimmt. Die Traktionsbatterie weist insbesondere eine Betriebsspannung zwischen 100 und 500 Volt auf. Die Traktionsbatterie weist insbesondere eine Speicherkapazität von zwischen 0,5 und 200 Kilowattstunden auf. Insbesondere weist die Traktionsbatterie eine Speicherkapazität von höchstens 40 kWh, bevorzugt von höchstens 20 kWh auf. Insbesondere weist die Traktionsbatterie eine Speicherkapazität von mindestens einer (1) kWh, bevorzugt von mindestens 5 kWh auf.

Insbesondere weist der dritte Kühlkreislauf einen zweiten Ausgleichbehälter auf. Der dritte Kühlkreislauf ist insbesondere weitgehend unabhängig von dem ersten Kühlkreislauf und dem zweiten Kühlkreislauf. Eine strömungstechnische Verbindung zwischen dem dritten Kühlkreislauf und den anderen Kühlkreisläufen, zumindest im Betrieb des Kraftfahrzeuges (ausgenommen also der Befüllvorgang des Kühlsystems), ist insbesondere nicht vorgesehen.

Eine Entlüftung eines Kühlkreislaufs erfolgt regelmäßig über einen Ausgleichsbehälter des Kühlsystems. Ein solcher Ausgleichsbehälter hat zudem noch die Aufgabe, die unterschiedliche, thermisch bedingte Ausdehnung des Kühlmittels zu kompensieren und ist dazu teilweise mit Luft gefüllt. Zur Entlüftung kann eine Entlüftungsleitung/ Rücklaufleitung von in der Regel der höchsten Stelle des jeweiligen Kühlkreislaufs eines Kühlsystems zu dem noch höher angeordneten (ggf. gemeinsam genutzten) Ausgleichsbehälter führen.

Die Entlüftungsleitung/ Rücklaufleitung führt das Kühlmittel bzw. Luft oder Gas aus dem jeweiligen Kühlkreislauf zurück zum Ausgleichbehälter. Über die Vorlaufleitung wird Kühlmittel aus dem Ausgleichbehälter zurück in den jeweiligen Kühlkreislauf geführt.

Insbesondere ist in dem ersten Kühlkreislauf zusätzlich ein Heizungswärmetauscher angeordnet. Als "Heizungswärmetauscher" wird ein Wärmetauscher des Kühlsystems verstanden, der ausschließlich oder primär einer Übertragung von Wärmeenergie von dem Kühlmittel auf (Umgebungs-)Luft, die einem Innenraum des Kraftfahrzeugs zu dessen Temperierung zugeführt wird, dient.

Insbesondere weist der erste Kühlkreislauf eine zusätzliche (zusätzlich zu der von der Verbrennungskraftmaschine angetriebenen ersten Pumpe), elektrisch betreibbare bzw. betriebene (vierte) Pumpe auf, so dass die Abwärme der Verbrennungskraftmaschine auch nach Abschalten der Verbrennungskraftmaschine für den Heizungswärmetauscher zur Beheizung eines Innenraums des Kraftfahrzeugs nutzbar ist. Dadurch kann z. B. bei Einsatz des Kraftfahrzeuges in Kaltländern oder auch im Winterbetrieb die Zeit des Betriebs der Verbrennungskraftmaschine reduziert werden, so dass ein Kraftstoffverbrauch und damit eine Emission von CO₂ reduziert werden kann und Geräuschemissionen vermieden werden können.

Insbesondere sind in dem zweiten Kühlkreislauf zusätzlich eine zweite Traktionsmaschine, ein Getriebe sowie eine Leistungselektronik angeordnet. Über das Getriebe sind ein serieller Betrieb, ein paralleler Betrieb und ein rein elektrischer Betrieb des Kraftfahrzeugs realisierbar.

Die Leistungselektronik ist insbesondere in dem Gehäuse des Getriebes integriert angeordnet. Die Leistungselektronik dient der Regelung der, der Traktionsmaschine bzw. den Traktionsmaschinen zugeführten bzw. der daraus abgeführten, Energie. Die Leistungselektronik umfasst insbesondere einen Pulswechselrichter, insbesondere einen Doppelpulswechselrichter, wenn zwei Traktionsmaschinen vorgesehen sein sollten, sowie einen HV-DC-DC-Wandler für die Komponenten des Traktionsantriebs.

Der bzw. die Traktionsmaschinen können direkt über das Kühlmittel des zweiten Kühlkreislaufs temperiert werden und/oder über das in dem Getriebe zirkulierende Öl. Der bzw. die Traktionsmaschinen können also in vorteilhafter Weise (ausschließlich) mittels Öl gekühlt ausgebildet sein, was eine konstruktiv vorteilhafte Ausgestaltung des Kraftfahrzeugs ermöglicht, weil eine Beaufschlagung der Traktionsmaschinen durch das im Kühlsystem zirkulierende Kühlmittel entfallen kann. Mittels des Kühlsystems bzw. des zweiten Kühlkreislaufs erfolgt dann lediglich eine Rückkühlung des Öls, wobei dieses weiterhin bevorzugt auch zur Schmierung und/oder Kühlung von weiteren Komponenten des Kraftfahrzeugs, insbesondere dem Getriebe, genutzt werden kann.

In dem (grundsätzlich bekannten) seriellen Betrieb ist die Antriebsachse nur mit der ersten Traktionsmaschine drehmomentübertragend verbunden und die Verbrennungskraftmaschine betreibt die zweite Traktionsmaschine im Generatorbetrieb. Die in der zweiten Traktionsmaschine erzeugte elektrische Energie kann zum Antrieb der ersten Traktionsmaschine oder zum Aufladen der Traktionsbatterie verwendet werden. Infolge der drehmomentübertragenden Verbindung der Antriebsachse nur mit der ersten Traktionsmaschine kann eine Rekuperation nur über die erste Traktionsmaschine erfolgen.

In dem (grundsätzlich bekannten) parallelen Betrieb sind beide Traktionsmaschinen und die Verbrennungskraftmaschine mit der Antriebsachse drehmomentübertragend verbunden. In dem parallelen Betrieb ist ein Boost-Betrieb (beide Traktionsmaschinen stellen zusätzliche Antriebsleistung bereit) und eine Rekuperation über jeweils eine der (oder über beide) Traktionsmaschinen möglich.

In dem (grundsätzlich bekannten) rein elektrischen Betrieb ist die Antriebsachse nur mit der ersten Traktionsmaschine drehmomentübertragend verbunden und die Verbrennungskraftmaschine und die zweite Traktionsmaschine stehen still (d. h. die Verbrennungskraftmaschine wird nicht betrieben). Gerade in diesem Betrieb wird z. B. eine Kühlleistung für die verbrennungsmotorischen Komponenten (Verbrennungskraftmaschine, Ladeluftkühler, Abgasturbolader, Abgaskühler, Motorölkühler) gerade nicht benötig (oder nur in sehr geringem Maße).

Insbesondere sind die Traktionsmaschinen und die Verbrennungskraftmaschinen über das Getriebe miteinander und mit der Antriebsachse schaltbar bzw. wahlweise verbindbar. Insbesondere ist die erste Traktionsmaschine dauerhaft und direkt mit der Antriebsachse drehmomentübertragend verbunden. Insbesondere ist die zweite Traktionsmaschine dauerhaft und direkt mit der Verbrennungskraftmaschine drehmomentübertragend verbunden. Insbesondere ist die durch die zweite Traktionsmaschine und die Verbrennungskraftmaschine gebildete Antriebseinheit mit der ersten Traktionsmaschine und mit der Antriebsachse über eine schaltbare Kupplung (K0-Kupplung, trennt und verbindet also die Verbrennungskraftmaschine von bzw. mit der Antriebsachse) verbunden bzw. schaltbar verbindbar.

Insbesondere ist das Getriebe ein ein-Gang-Getriebe, d. h. die Drehmomente werden immer über eine konstante Übersetzung auf die Antriebsachse übertragen.

Insbesondere ist in dem zweiten Kühlkreislauf zusätzlich ein Ladeluftkühler angeordnet. Insbesondere ist in dem zweiten Kühlkreislauf stromabwärts des Ladeluftkühlers ein Abgasturbolader angeordnet.

Insbesondere weist der zweite Kühlkreislauf einen ersten Teilkühlkreislauf und einen zweiten Teilkühlkreislauf auf, die parallel miteinander verschaltet sind. In dem ersten Teilkühlkreislauf ist insbesondere die erste Traktionsmaschine (und ggf. die zweite Traktionsmaschine, eine Leistungselektronik - für die elektrischen Traktionskomponenten, ein Getriebeölkühler und das Getriebe) angeordnet. In dem zweiten Teilkühlkreislauf ist insbesondere der Ladeluftkühler (und ggf. der Abgasturbolader) angeordnet.

Als "Getriebeölkühler" wird eine Komponente des Kühlsystems verstanden, die ausschließlich oder primär einer Übertragung von Wärmeenergie von einem Öl auf das in dem Kühlsystem zirkulierende Kühlmittel dient. Das Öl dient insbesondere der Schmierung und/oder Kühlung einer Mehrzahl von Komponenten des Kraftfahrzeugs, insbesondere des Getriebes und/oder der Traktionsmaschine oder der Traktionsmaschinen.

Insbesondere werden über den Getriebeölkühler und das durch diesen strömende Öl alle Komponenten des Getriebes (inklusive der Traktionsmaschinen) temperiert. Insbesondere werden keine Komponenten der Verbrennungskraftmaschine (also auch nicht Abgasturbolader, Motorölkühler, Zylindergehäuse bzw. -kopf) mit Öl beaufschlagt, dass über den Getriebeölkühler temperierbar ist.

Infolge der Aufteilung des zweiten Kühlkreislaufs in Teilkühlkreisläufe kann insbesondere der Ladeluftkühler effektiv betrieben, also die Ladeluft der Verbrennungskraftmaschine effektiv gekühlt werden.

Insbesondere ist in dem dritten Kühlkreislauf zusätzlich ein DC-DC-Wandler (unmittelbar) stromabwärts der Traktionsbatterie angeordnet. Der DC-DC-Wandler dient der Umwandlung der in der Traktionsbatterie vorliegenden elektrischen Spannung in die Betriebsspannung von Komponenten des Bordnetzes des Kraftfahrzeuges, die insbesondere mit 12 Volt betrieben werden.

Insbesondere sind die Wärmetauscher in einem vorderen Bereich des Kraftfahrzeuges und zumindest (bzw. im Hinblick auf die bisher angeführten Komponenten des Kühlsystems: ausschließlich) die Traktionsbatterie und der DC-DC-Wandler in einem hinteren Bereich des Kraftfahrzeuges angeordnet.

In dem dritten Kühlkreislauf ist ein über ein 3-2-Wege-Ventil zuschaltbarer Chiller angeordnet. Das 3-2-Wege Ventil (drei Anschlüsse, zwei Ventilstellungen) ermöglicht eine wahlweise Einbindung des Chillers in den dritten Kühlkreislauf. Der Chiller ist insbesondere als zeitweiser Ersatz für den dritten Wärmetauscher vorgesehen, d. h. das Kühlmittel durchströmt entweder den dritten Wärmetauscher oder den Chiller.

Ein "Chiller" ist insbesondere ein Kühlmittel-Kältemittel-Wärmetauscher einer Kältemaschine, die insbesondere auf einem thermodynamischen Kreisprozesse beruhen kann. Die Kältemaschine kann dabei insbesondere auch als Klimagerät vorgesehen sein, durch das bedarfsweise eine Kühlung von Luft erfolgt, die einem Innenraum des Kraftfahrzeugs zugeführt werden kann.

Der Chiller ist insbesondere unmittelbar stromaufwärts der Traktionsbatterie angeordnet.

Insbesondere ist der zweite Kühlkreislauf ausschließlich über die zweite Rücklauflaufleitung mit einem Kühlmittel befüllbar und der erste Kühlkreislauf und der zweite Kühlkreislauf sind ausschließlich über die zweite Rücklaufleitung strömungstechnisch miteinander verbunden.

Insbesondere sind die erste Rücklaufleitung, die zweite Rücklaufleitung und eine diese beiden Rücklaufleitungen mit dem ersten Ausgleichbehälter verbindende dritte Rücklaufleitung über ein besonderes T-Stück miteinander verbunden. Insbesondere wird dadurch eine Luftvorlage in der Rücklaufleitung bereitgestellt, so dass nach einem erstmaligen Befüllen der Kühlkreisläufe eine fluidtechnische Trennung beider Kühlkreisläufe gewährleistet bleibt. Das hat den Vorteil, dass der zweite Kühlkreislauf nicht von dem ersten Kühlkreislauf erwärmt wird und somit effektiver Kühlen kann. Damit kann eine effektive Kühlleistung für die Ladeluft bereitgestellt werden, so dass Verbrennungsprozesse in der Verbrennungskraftmaschine verbessert und damit Emissionen im Abgas verringert werden können. Ein solches T-Stück ist insbesondere aus der eingangs angeführten DE 10 2022 102 759 A1 bekannt.

Das T-Stück umfasst drei Anschlüsse und ist so im Kraftfahrzeug gegenüber der Schwerkraft angeordnet, dass ein höchstgelegener erster Anschluss das T-Stück mit der dritten Rücklaufleitung und ein am tiefsten liegender zweiter Anschluss das T-Stück mit der zweiten Rücklaufleitung verbindet. Zwischen dem höchstgelegenen und dem am tiefsten liegenden Anschluss ist ein dritter Anschluss angeordnet, der das T-Stück mit der ersten Rücklaufleitung verbindet. Die beiden oberen Anschlüsse (erster Anschluss und dritter Anschluss) sind also zueinander versetzt, d. h. nicht zueinander fluchtend, am T-Stück angeordnet.

Infolge der Anordnung des dritten Anschlusses oberhalb des zweiten Anschlusses kann aus der ersten Rücklaufleitung (des ersten Kühlkreislaufs) austretendes Gas (bzw. Luft) direkt hin zum ersten Anschluss und damit hin zum Ausgleichsbehälter überführt werden.

Die nicht fluchtende Anordnung der Anschlüsse verbessert insbesondere die Durchströmung des T-Stücks.

Insbesondere sind die Rücklaufleitungen jeweils mit der Hochdruckseite des jeweiligen Kühlkreislaufs verbunden, also jeweils stromaufwärts des in dem jeweiligen Kühlkreislaufs angeordneten (ersten, zweiten, dritten) Wärmetauschers und stromabwärts der dort jeweils angeordneten Pumpe.

Insbesondere sind die zweite Pumpe und die dritte Pumpe jeweils elektrisch betriebene Pumpen, wobei das Kühlsystem nur drei Pumpen aufweist.

Insbesondere kann zumindest der in dem ersten Kühlkreislauf angeordnete Heizungswärmetauscher über eine weitere elektrische Pumpe (also eine dritte elektrische Pumpe bzw. eine vierte Pumpe) mit Kühlmittel beschickt werden, so dass auch bei abgeschalteter Verbrennungskraftmaschine ein Innenraum des Kraftfahrzeugs beheizbar ist.

Insbesondere ist der Heizungswärmetauscher in einem separaten Teil des ersten Kühlkreislaufs angeordnet. Insbesondere ist in diesem Teil des ersten Kühlkreislaufs die weitere elektrische (vierte) Pumpe angeordnet. Insbesondere ist dieser Teil, umfassend den Heizungswärmetauscher und die weitere elektrische (vierte) Pumpe, auch als eigener (vierter) Kühlkreislauf betreibbar. Insbesondere erfolgt das gerade dann, wenn z. B. die Verbrennungskraftmaschine abgeschaltet ist und der Innenraum des Kraftfahrzeuges aber beheizt werden soll. Zusätzlich kann in diesem Teil des ersten Kühlkreislaufs ein Wasser-Wasser-Wärmetauscher angeordnet sein, über den Wärme aus dem Teil des ersten Kühlkreislaufs (bzw. dem vierten Kühlkreislauf) an den dritten Kühlkreislaufs übertragen werden kann. D. h. insbesondere dass der Wasser-Wasser-Wärmetauscher sowohl in dem Teil des ersten Kühlkreislaufs (vierter Kühlkreislauf) als auch in dem dritten Kühlkreislauf angeordnet ist.

Insbesondere ist in dem Teil des ersten Kühlkreislaufs (vierter Kühlkreislauf) zusätzlich ein (grundsätzlich bekannter) PTC-Heizer (positive temperature coefficient-Heizer) angeordnet. Über diesen kann das (insbesondere dann ausschließlich) in dem Teil des ersten Kühlkreislaufs (vierter Kühlkreislauf) zirkulierende Kühlmittel beheizt werden, auch wenn die Verbrennungskraftmaschine abgeschaltet ist.

Insbesondere kann der Wasser-Wasser-Wärmetauscher in dem dritten Kühlkreislauf über ein Abschaltventil schaltbar eingebunden sein, so dass die Traktionsbatterie nicht zu sehr erhitzt wird, wenn der PTC-Heizer in dem Teil des ersten Kühlkreislaufs (vierter Kühlkreislauf) länger betrieben wird (z. B. um den Innenraum des Kraftfahrzeugs weiter aufzuheizen).

Insbesondere ist das Kühlsystem bis auf ein 3-2-Wege-Ventil im dritten Kühlkreislauf frei von Rückschlagventilen und anderen Ventilen (z. B. Umschaltventilen, etc.).

Insbesondere weist das Kühlsystem also genau drei Kühlkreisläufe und genau drei Pumpen auf. Insbesondere sind außer dem einen 3-2-Wege-Ventil keine weiteren Ventile (also die Durchströmung des Kühlsystems steuernde Komponenten) vorgesehen. Damit kann ein einfaches Kühlsystem realisiert werden, dass kostengünstig bereitgestellt werden kann und dabei aber einen effektiven Betrieb des Kraftfahrzeuges ermöglicht. Die Durchströmung der einzelnen Kühlkreisläufe wird insbesondere (ausschließlich) durch die Pumpen geregelt. Ein Stillstand der Verbrennungskraftmaschine bedingt insbesondere einen Stillstand der ersten Pumpe.

Insbesondere sind in jedem der Kühlkreisläufe, bevorzugt auch in jedem der Teilkühlkreisläufe Temperatursensoren bzw. Temperaturgeber angeordnet, durch die z. B. eine Förderleistung der jeweiligen Pumpe einstellbar ist.

Insbesondere umfasst das Kraftfahrzeug bzw. das Kühlsystem ein System zur Datenverarbeitung, z. B. ein Steuergerät, das Mittel zum Betrieb des Kühlsystems, also insbesondere zum Betrieb der Pumpen und ggf. zum Schalten des (mindestens einen) 3-2-WegeVentils aufweist und/ oder das Mittel aufweist, die zum Betrieb des Kühlsystems geeignet ausgestattet, konfiguriert oder programmiert sind bzw. das Kühlsystem betreiben.

Die Mittel umfassen z. B. einen Prozessor und einen Speicher, in dem durch den Prozessor auszuführende Befehle gespeichert sind, sowie Datenleitungen oder Übertragungseinrichtungen, die eine Übertragung von Befehlen, Messwerten, Daten oder ähnlichem zwischen den angeführten Elementen ermöglichen.

Die "Mittel" können insbesondere eine oder mehrere folgender Komponenten umfassen: Steuerung(en), Mikrocontroller, Datenspeicher, Datenverbindung, Anzeigegeräte (wie z.B. ein Display), Zähler bzw. Zeitglied (Timer), mindestens ein weiterer Sensor, eine (separate) Energiequelle, etc.

Die Verwendung unbestimmter Artikel ("ein", "eine", "einer" und "eines"), insbesondere in den Patentansprüchen und der diese wiedergebenden Beschreibung, ist als solche und nicht als Zahlwort zu verstehen. Entsprechend damit eingeführte Begriffe bzw. Komponenten sind somit so zu verstehen, dass diese mindestens einmal vorhanden sind und insbesondere aber auch mehrfach vorhanden sein können.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung. Soweit ein Bauteil mehrfach vorkommen kann ("mindestens ein"), kann die Beschreibung zu einem dieser Bauteile für alle oder ein Teil der Mehrzahl dieser Bauteile gleichermaßen gelten, dies ist aber nicht zwingend.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist darauf hinzuweisen, dass die Figuren und insbesondere die dargestellten Größenverhältnisse nur schematisch sind. Es zeigen:
- Fig. 1:: ein Kraftfahrzeug;
- Fig. 2:: eine Betriebsart des Kraftfahrzeugs nach Fig. 1;
- Fig. 3:: das Kühlsystem des Kraftfahrzeugs nach Fig. 1;
- Fig. 4:: ein T-Stück des Kühlsystems nach Fig. 3;
- Fig. 5:: eine alternative erste Ausführungsvariante des ersten Kühlkreislaufs; und
- Fig. 6:: eine alternative zweite Ausführungsvariante des ersten Kühlkreislaufs.

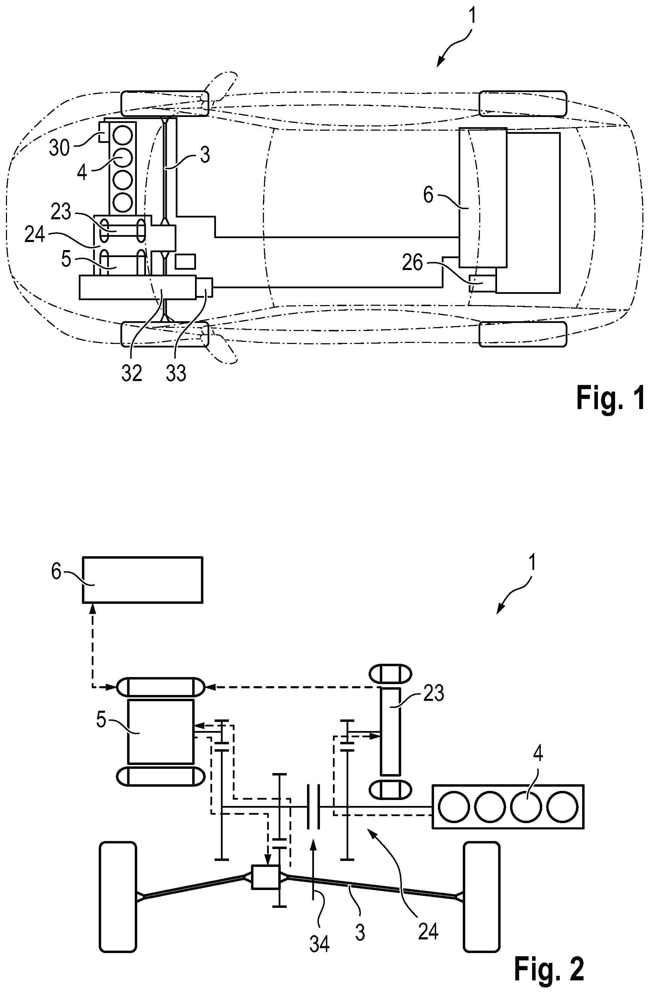

Die Fig. 1 zeigt ein Kraftfahrzeug 1 (in einer Ansicht von oben). Das Kraftfahrzeug 1 ist ein Hybridfahrzeug (HEV) und umfasst neben einer Verbrennungskraftmaschine 4 zwei Traktionsmaschinen 5, 23. Das Kraftfahrzeug 1 ist nicht als Plug-in Hybridfahrzeug (PHEV) ausgebildet. Das Kraftfahrzeug 1 umfasst weiter eine Antriebsachse 3 (also eine von der Verbrennungskraftmaschine 4 oder den Traktionsmaschinen 5, 23 angetriebene Achse), eine Traktionsbatterie 6, einen DC-DC-Wandler 26 sowie ein Getriebe 24, durch das die Traktionsmaschinen 5, 23 und die Verbrennungskraftmaschine 4 in unterschiedlicher Weise mit der Antriebsachse 3 drehmomentübertragend verbindbar sind.

Eine Leistungselektronik 25, die der Regelung der den Traktionsmaschinen 5, 23 zugeführten bzw. daraus abgeführten Energie dient, ist in dem Gehäuse des Getriebes 24 integriert angeordnet. Die Leistungselektronik 25 umfasst einen Doppelpulswechselrichter 32 für die zwei Traktionsmaschinen 5, 23 sowie einen HV-DC-DC-Wandler 33 für die Komponenten 5, 6 23, des Traktionsantriebs.

Fig. 2 zeigt eine Betriebsart des Kraftfahrzeugs 1 nach Fig. 1. Auf die Ausführungen zu Fig. 1 wird Bezug genommen.

In dem dargestellten seriellen Betrieb ist die Antriebsachse 3 nur mit der ersten Traktionsmaschine 5 drehmomentübertragend verbunden und die Verbrennungskraftmaschine 4 betreibt die zweite Traktionsmaschine 23 im Generatorbetrieb. Die in der zweiten Traktionsmaschine 23 erzeugte elektrische Energie kann zum Antrieb der ersten Traktionsmaschine 5 oder zum Aufladen der Traktionsbatterie 6 verwendet werden. Infolge der drehmomentübertragenden Verbindung der Antriebsachse 3 nur mit der ersten Traktionsmaschine 5 kann eine Rekuperation nur über die erste Traktionsmaschine 5 erfolgen. Die Trennung der Verbrennungskraftmaschine 4 und der zweiten Traktionsmaschine 23 von der Antriebsachse 3 erfolgt über eine Kupplung 34.

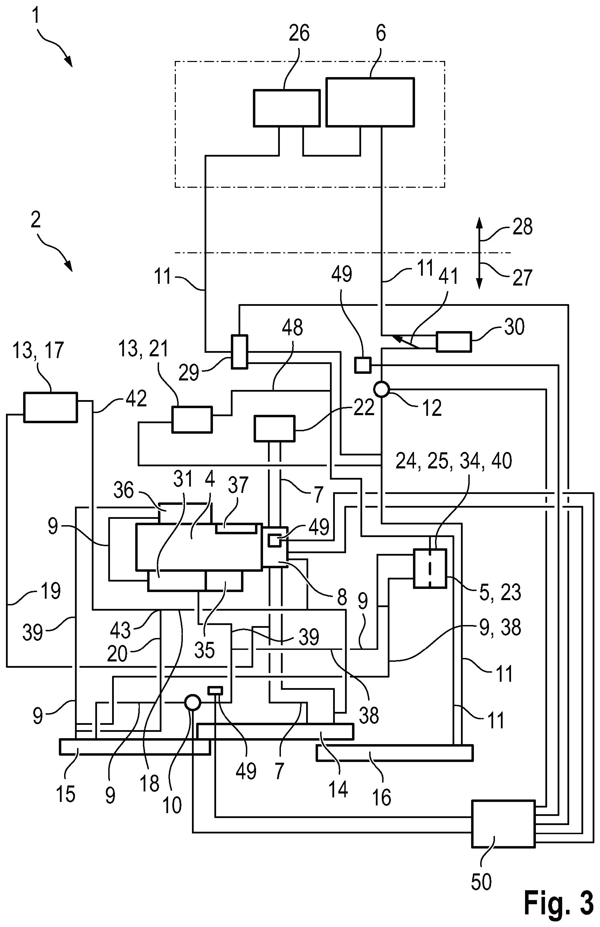

Fig. 3 zeigt das Kühlsystem 2 des Kraftfahrzeugs 1 nach Fig. 1. Auf die Ausführungen zu Fig. 1 und 2 wird Bezug genommen.

Das Kühlsystem 2 weist einen ersten Kühlkreislauf 7 (Hochtemperaturkreislauf) mit einer ersten Pumpe 8, einen zweiten Kühlkreislauf 9 (Niedertemperaturkreislauf) mit einer zweiten Pumpe 10 und einen dritten Kühlkreislauf 11 (Niedertemperaturkreislauf) mit einer dritten Pumpe 12 auf. Durch jede Pumpe 8, 10, 12 ist ein Kühlmittel 13 (nur) durch den jeweiligen Kühlkreislauf 7, 9, 11 beförderbar.

In dem ersten Kühlkreislauf 7 sind die erste Pumpe 8 (von der Verbrennungskraftmaschine 4 angetrieben) und stromabwärts davon die zu kühlenden Komponenten der Verbrennungskraftmaschine 4 (Zylinderkopf, Zylindergehäuse, Motorölkühler 35, Abgaskühler 37) und weiter stromabwärts ein Heizungswärmetauscher 22 angeordnet. Die erste Pumpe 8 ist stromabwärts des ersten Wärmetauschers 14 angeordnet.

In dem zweiten Kühlkreislauf 9 sind die (elektrisch betriebene) zweite Pumpe 10 und stromabwärts davon zunächst der Ladeluftkühler 31 und dann der Abgasturbolader 36 angeordnet. Die zweite Pumpe 10 ist stromabwärts des zweiten Wärmetauschers 15 angeordnet.

Der zweite Kühlkreislauf 9 weist einen ersten Teilkühlkreislauf 38 und einen zweiten Teilkühlkreislauf 39 auf, die parallel miteinander verschaltet sind. In dem ersten Teilkühlkreislauf 38 sind die erste Traktionsmaschine 5, die zweite Traktionsmaschine 23, eine Leistungselektronik 25 (für die elektrischen Traktionskomponenten 5, 6, 23) ein Getriebeölkühler 40 und das Getriebe 24) angeordnet. Über den Getriebeölkühler 40 werden die Traktionsmaschinen 4, 23, die Leistungselektronik 25 und das Getriebe 24 gekühlt.

Die Traktionsmaschinen 5, 23 können über das in dem Getriebe 24 zirkulierende Öl gekühlt werden. Mittels des Kühlsystems 2 bzw. des ersten Teilkühlkreislaufs 39 erfolgt eine Rückkühlung des Getriebeöls, wobei dieses weiterhin auch zur Schmierung und/oder Kühlung von weiteren Komponenten des Getriebes 24 (Leistungselektronik 25, Kupplung 34) genutzt werden kann.

In dem zweiten Teilkühlkreislauf 39 sind der Ladeluftkühler 31 und der Abgasturbolader 36 angeordnet. Die stromaufwärtige Verbindung zwischen den Teilkühlkreisläufen 38, 39 ist unmittelbar stromabwärts der zweiten Pumpe 10 angeordnet. Die stromabwärtige Zusammenführung der Teilkühlkreisläufe 38, 39 ist unmittelbar stromaufwärts des zweiten Wärmetauschers 15 angeordnet.

Infolge der Aufteilung des zweiten Kühlkreislaufs 9 in Teilkühlkreisläufe 38, 39 kann der Ladeluftkühler 31 effektiv betrieben, also die Ladeluft der Verbrennungskraftmaschine 4 effektiv gekühlt werden.

In dem dritten Kühlkreislauf 11 sind die (elektrisch betriebene) dritte Pumpe 12 und stromabwärts davon die Traktionsbatterie 6 und dann der DC-DC-Wandler 26 angeordnet. Die dritte Pumpe 12 ist stromabwärts des dritten Wärmetauschers 16 angeordnet. Der DC-DC-Wandler 26 dient der Umwandlung der in der Traktionsbatterie 6 vorliegenden elektrischen Spannung in die Betriebsspannung von Komponenten des Bordnetzes des Kraftfahrzeuges 1, die mit 12 Volt betrieben werden.

In dem dritten Kühlkreislauf 11 ist ein über ein 3-2-Wege-Ventil 29 zuschaltbarer Chiller 30 angeordnet. Das 3-2-Wege Ventil 29 ist stromabwärts des DC-DC-Wandlers 26 angeordnet und ermöglicht eine wahlweise Einbindung des Chillers 30 in den dritten Kühlkreislauf 11. Der Chiller 30 kann anstatt des dritten Wärmetauschers 16 in den dritten Kühlkreislauf 11 eingebunden werden, d. h. das Kühlmittel 13 durchströmt entweder den dritten Wärmetauscher 16 oder den Chiller 30. Der Chiller 30 ist unmittelbar stromabwärts der dritten Pumpe 12 angeordnet. Über einen Bypass 41 kann das Kühlmittel 13 an dem Chiller 30 vorbeigeleitet werden.

Der erste Kühlkreislauf 7 und der zweite Kühlkreislauf 9 weisen einen gemeinsamen ersten Ausgleichsbehälter 17 auf. Der erste Kühlkreislauf 7 ist über eine erste Rücklaufleitung 18 und eine erste Vorlaufleitung 19 und der zweite Kühlkreislauf 9 nur über eine zweite Rücklaufleitung 20 mit dem ersten Ausgleichbehälter 17 verbunden.

Der dritte Kühlkreislauf 11 weist einen (eigenen) zweiten Ausgleichbehälter 21 auf.

Die einzelnen zu kühlenden bzw. zu temperierenden Komponenten des Kühlsystems 2 sind in besonders vorteilhafter Weise auf die Kühlkreisläufe 7, 9, 11 verteilt. Die besondere Verteilung der Komponenten ermöglicht die schnelle Bereitstellung einer Heizleistung für einen Innenraum des Kraftfahrzeuges 1, weil nur ein Heizungswärmetauscher 22 in dem ersten Kühlkreislauf 7 angeordnet ist, so dass die von dem Kühlmittel 13 in der Verbrennungskraftmaschine 4 aufgenommene Wärme direkt an den unmittelbar stromabwärts der Verbrennungskraftmaschine 4 angeordneten Heizungswärmetauscher 22 abgegeben werden kann, bevor das Kühlmittel 13 in dem ersten Wärmetauscher 14 dann weiter abgekühlt wird.

Die Wärmetauscher 14, 15, 16 sind in einem vorderen Bereich 27 des Kraftfahrzeuges 1 und nur die Traktionsbatterie 6 und der DC-DC-Wandler 26 sind in einem hinteren Bereich 28 des Kraftfahrzeuges 1 angeordnet.

Die erste Rücklaufleitung 18, die zweite Rücklaufleitung 20 und eine diese beiden Rücklaufleitungen 18, 20 mit dem ersten Ausgleichbehälter 17 verbindende dritte Rücklaufleitung 42 sind über ein besonderes T-Stück 43 miteinander verbunden. Es wird dadurch eine Luftvorlage in den Rücklaufleitungen 18, 20, 42 bereitgestellt, so dass nach einem erstmaligen Befüllen der Kühlkreisläufe 7, 9, 11 eine fluidtechnische Trennung beider Kühlkreisläufe 7, 9 gewährleistet bleibt. Das hat den Vorteil, dass der zweite Kühlkreislauf 9 nicht von dem ersten Kühlkreislauf 7 erwärmt wird und somit effektiver Kühlen kann. Damit kann eine effektive Kühlleistung für die Ladeluft bereitgestellt werden, so dass Verbrennungsprozesse in der Verbrennungskraftmaschine 4 verbessert und damit Emissionen im Abgas verringert werden können.

Das T-Stück 43 umfasst drei Anschlüsse 44, 45, 46 und ist so im Kraftfahrzeug 1 gegenüber der Schwerkraft 47 angeordnet, dass ein höchstgelegener erster Anschluss 44 das T-Stück 43 mit der dritten Rücklaufleitung 42 und ein am tiefsten liegender zweiter Anschluss 45 das T-Stück 43 mit der zweiten Rücklaufleitung 20 verbindet. Zwischen dem höchstgelegenen ersten Anschluss 44 und dem am tiefsten liegenden zweiten Anschluss 45 ist ein dritter Anschluss 46 angeordnet, der das T-Stück 43 mit der ersten Rücklaufleitung 18 verbindet. Die beiden oberen Anschlüsse 44, 46 (erster Anschluss 44 und dritter Anschluss 46) sind also zueinander versetzt, d. h. nicht zueinander fluchtend, am T-Stück 43 angeordnet.

Infolge der Anordnung des dritten Anschlusses 46 oberhalb des zweiten Anschlusses 45 kann aus der ersten Rücklaufleitung 18 (des ersten Kühlkreislaufs 7) austretendes Gas (bzw. Luft) direkt hin zum ersten Anschluss 44 und damit hin zum ersten Ausgleichsbehälter 17 überführt werden.

Die erste Rücklaufleitung 18, die zweite Rücklaufleitung 20 und die vierte Rücklaufleitung 48, die den dritten Kühlkreislauf 11 mit dem zweiten Ausgleichbehälter 21 verbindet sind jeweils mit der Hochdruckseite des jeweiligen Kühlkreislaufs 7, 9, 11 verbunden, also jeweils stromaufwärts des in dem jeweiligen Kühlkreislaufs 7, 9, 11 angeordneten (ersten, zweiten, dritten) Wärmetauschers 14, 15, 16 und stromabwärts der dort jeweils angeordneten Pumpe 8, 10, 12.

In jedem der Kühlkreisläufe 7, 9, 11 ist jeweils ein Temperatursensor 49 angeordnet, anhand dessen Sensorwerte z. B. eine Förderleistung der jeweiligen Pumpe 8, 10, 12 über das Steuergerät 50 einstellbar ist.

Das Steuergerät 50 weist Mittel zum Betrieb des Kühlsystems 2, also insbesondere zum Betrieb der Pumpen 8, 10, 12 und zum Schalten des 3-2-Wege-Ventils 29 auf.

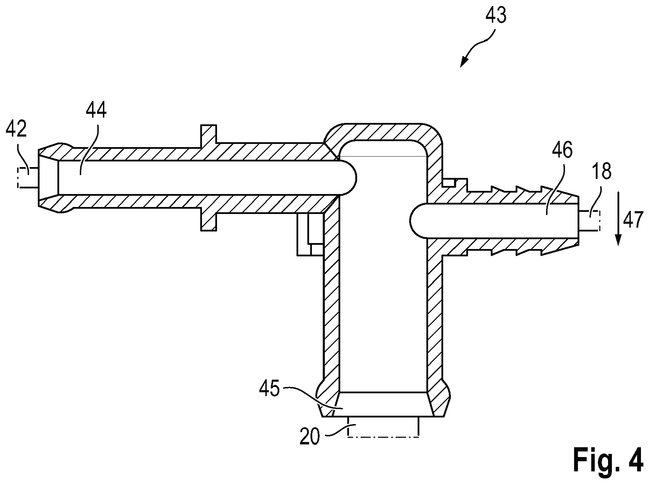

Fig. 4 zeigt das T-Stück 43 des Kühlsystems 2 nach Fig. 3. Auf die Ausführungen zu Fig. 3 wird Bezug genommen.

Das T-Stück 43 umfasst drei Anschlüsse 44, 45, 46 und ist so im Kraftfahrzeug 1 gegenüber der Schwerkraft 47 angeordnet, dass ein höchstgelegener erster Anschluss 44 das T-Stück 43 mit der dritten Rücklaufleitung 42 und ein am tiefsten liegender zweiter Anschluss 45 das T-Stück 43 mit der zweiten Rücklaufleitung 20 verbindet. Zwischen dem höchstgelegenen ersten Anschluss 44 und dem am tiefsten liegenden zweiten Anschluss 45 ist ein dritter Anschluss 46 angeordnet, der das T-Stück 43 mit der ersten Rücklaufleitung 18 verbindet.

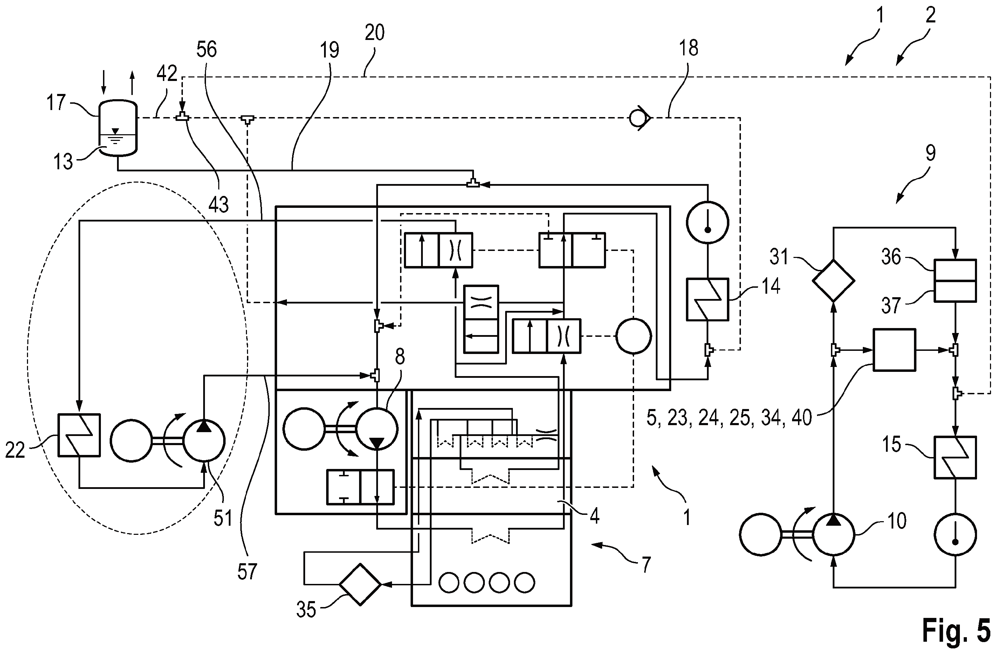

Fig. 5 zeigt eine alternative erste Ausführungsvariante des ersten Kühlkreislaufs 7. Auf die Ausführungen zu den Fig. 1 bis 4 wird verwiesen, insbesondere im Hinblick auf die Ausgestaltung des Kühlsystems 2.

Im Unterschied zur Ausführung des Kühlsystems 2 gemäß Fig. 3 weist die alternative erste Ausführungsvariante des ersten Kühlkreislaufs 7 eine stromabwärts des Heizungswärmetauschers 22 angeordnete zusätzliche, elektrisch betreibbare bzw. betriebene vierte Pumpe 51 auf, so dass die Abwärme der Verbrennungskraftmaschine 4 auch nach Abschalten der Verbrennungskraftmaschine 4 für den Heizungswärmetauscher 22 zur Beheizung eines Innenraums des Kraftfahrzeugs 1 nutzbar ist. Dadurch kann z. B. bei Einsatz des Kraftfahrzeuges 1 in Kaltländern oder auch im Winterbetrieb die Zeit des Betriebs der Verbrennungskraftmaschine 4 reduziert werden, so dass ein Kraftstoffverbrauch und damit eine Emission von CO₂ reduziert werden kann und Geräuschemissionen vermieden werden können.

Die in Fig. 5 gezeigten Umschaltventile (z. B. Umschaltung zwischen Drossel und Durchleitung) sind nur optional und für den Betrieb des ersten Kühlkreislaufs 7 nicht zwingend erforderlich.

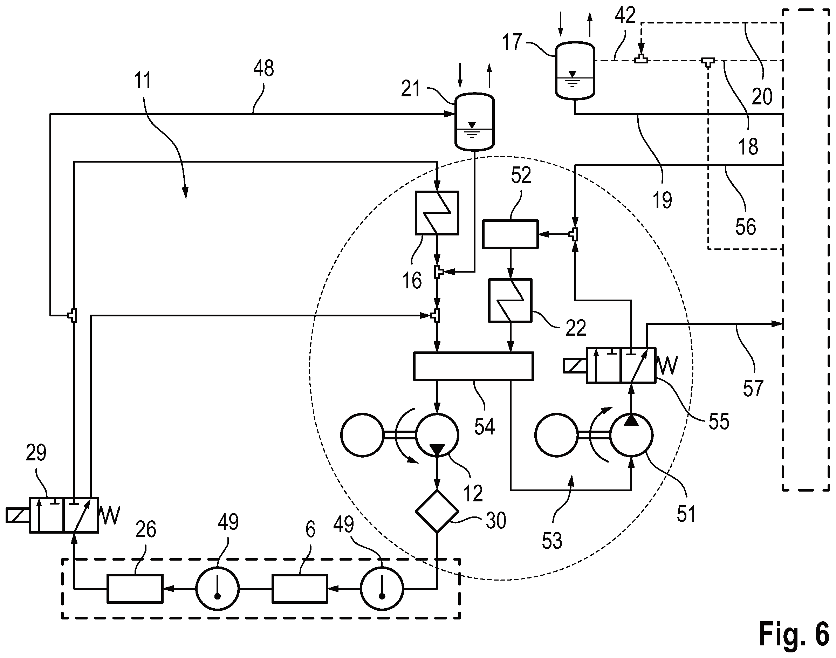

Fig. 6 zeigt eine alternative zweite Ausführungsvariante des ersten Kühlkreislaufs 7. Auf die Ausführungen zu Fig. 5 wird verwiesen. Im Unterschied zu Fig. 3 und Fig. 5 ist hier der erste Kühlkreislauf 7 mit dem dritten Kühlkreislauf 11 über einen Wasser-Wasser-Wärmetauscher 54 gekoppelt. Der in Fig. 6 von einer gestrichelten Linie umgebene Bereich ersetzt dabei den in Fig. 5 von einer gestrichelten Linie umgebenen Bereich. Die Koppelungspunkte 56, 57 in den Fig. 5 und 6 verdeutlichen diese Ergänzung des ersten Kühlkreislaufs 7 (der in Fig. 6 durch das gestrichelte Rechteck nur angedeutet ist). Über den in Fig. 6 von der gestrichelten Linie umgebenen Bereich ist der erste Kühlkreislauf 7 mit dem dritten Kühlkreislauf 11 gekoppelt.

Hier ist der Heizungswärmetauscher 22 in einem separaten Teil des ersten Kühlkreislaufs 7 angeordnet. In diesem Teil des ersten Kühlkreislaufs 7 ist die weitere elektrische vierte Pumpe 51 angeordnet. Dieser Teil, umfassend den Heizungswärmetauscher 22 und die weitere elektrische vierte Pumpe 51, ist auch als eigener vierter Kühlkreislauf 53 betreibbar; z. B. gerade dann, wenn die Verbrennungskraftmaschine 4 abgeschaltet ist und der Innenraum des Kraftfahrzeuges 1 aber beheizt werden soll. Für den eigenständigen Betrieb des vierten Kühlkreislaufs 53 ist ein zweites 3-2-Wege-Ventil 55 in dem ersten Kühlkreislauf 7 vorgesehen, durch das die vierte Pumpe 51 mit dem ersten Kühlkreislauf 7 verbindbar oder davon trennbar ist.

Zusätzlich ist in diesem Teil des ersten Kühlkreislaufs 7 (vierter Kühlkreislauf 53) ein Wasser-Wasser-Wärmetauscher 54 angeordnet, über den Wärme aus dem Teil des ersten Kühlkreislaufs 7 (bzw. dem vierten Kühlkreislauf 53) an den dritten Kühlkreislauf 11 übertragen werden kann. D. h., dass der Wasser-Wasser-Wärmetauscher 54 sowohl in dem Teil des ersten Kühlkreislaufs 7 (vierter Kühlkreislauf 53) als auch in dem dritten Kühlkreislauf 11 angeordnet ist.

In dem Teil des ersten Kühlkreislaufs 7 (vierter Kühlkreislauf 53) ist zusätzlich ein PTC-Heizer 52 angeordnet. Über diesen kann das in dem Teil des ersten Kühlkreislaufs 7 (vierter Kühlkreislauf 53) zirkulierende Kühlmittel 13 beheizt werden, auch wenn die Verbrennungskraftmaschine 4 abgeschaltet ist.

### Bezugszeichenliste

- 1: Kraftfahrzeug
- 2: Kühlsystem
- 3: Antriebsachse
- 4: Verbrennungskraftmaschine
- 5: erste Traktionsmaschine
- 6: Traktionsbatterie
- 7: erster Kühlkreislauf
- 8: erste Pumpe
- 9: zweiter Kühlkreislauf
- 10: zweite Pumpe
- 11: dritter Kühlkreislauf
- 12: dritte Pumpe
- 13: Kühlmittel
- 14: erster Wärmetauscher
- 15: zweiter Wärmetauscher
- 16: dritter Wärmetauscher
- 17: erster Ausgleichsbehälter
- 18: erste Rücklaufleitung
- 19: erste Vorlaufleitung
- 20: zweite Rücklaufleitung
- 21: zweiter Ausgleichsbehälter
- 22: Heizungswärmetauscher
- 23: zweite Traktionsmaschine
- 24: Getriebe
- 25: Leistungselektronik
- 26: DC-DC-Wandler
- 27: vorderer Bereich
- 28: hinterer Bereich
- 29: (erstes) 3-2-Wege-Ventil
- 30: Chiller
- 31: Ladeluftkühler
- 32: Doppelpulswechselrichter
- 33: HV-DC-DC-Wandler
- 34: Kupplung
- 35: Motorölkühler
- 36: Abgasturbolader
- 37: Abgaskühler
- 38: erster Teilkühlkreislauf
- 39: zweiter Teilkühlkreislauf
- 40: Getriebeölkühler
- 41: Bypass
- 42: dritte Rücklaufleitung
- 43: T-Stück
- 44: erster Anschluss
- 45: zweiter Anschluss
- 46: dritter Anschluss
- 47: Schwerkraft
- 48: vierte Rücklaufleitung
- 49: Temperatursensor
- 50: Steuergerät
- 51: vierte Pumpe
- 52: PTC-Heizer
- 53: vierter Kühlkreislauf
- 54: Wasser-Wasser-Wärmetauscher
- 55: zweites 3-2-Wege Ventil
- 56: erster Koppelungspunkt
- 57: zweiter Koppelungspunkt

## Patentansprüche

1. Kraftfahrzeug (1) mit einem Kühlsystem (2), wobei das Kraftfahrzeug (1)eine Antriebsachse (3), eine Verbrennungskraftmaschine (4), eine erste Traktionsmaschine (5) und eine Traktionsbatterie (6) aufweist, wobei das Kühlsystem (2) einen ersten Kühlkreislauf (7) mit einer ersten Pumpe (8), einen zweiten Kühlkreislauf (9) mit einer zweiten Pumpe (10) und einen dritten Kühlkreislauf (11) mit einer dritten Pumpe (12) aufweist; wobei durch jede Pumpe (8, 10, 12) ein Kühlmittel (13) durch den jeweiligen Kühlkreislauf (7, 9, 11) beförderbar ist; wobei in dem ersten Kühlkreislauf (7) zumindest ein erster Wärmetauscher (14) und die Verbrennungskraftmaschine (4), in dem zweiten Kühlkreislauf (9) zumindest ein zweiter Wärmetauscher (15) und die erste Traktionsmaschine (5) und in dem dritten Kühlkreislauf (11) ein dritter Wärmetauscher (16) und die Traktionsbatterie (6) angeordnet sind, wobei der erste Kühlkreislauf (7) und der zweite Kühlkreislauf (9) einen gemeinsamen ersten Ausgleichsbehälter (17) aufweisen, wobei der erste Kühlkreislauf (7) über eine erste Rücklaufleitung (18) und eine erste Vorlaufleitung (19) und der zweite Kühlkreislauf (9) nur über eine zweite Rücklaufleitung (20) mit dem ersten Ausgleichbehälter (17) verbunden sind.

2. Kraftfahrzeug (1) nach Anspruch 1, wobei der dritte Kühlkreislauf (11) einen zweiten Ausgleichbehälter (21) aufweist.

3. Kraftfahrzeug (1) nach einem der vorhergehenden Ansprüche, wobei in dem ersten Kühlkreislauf (7) zusätzlich ein Heizungswärmetauscher (22) angeordnet ist.

4. Kraftfahrzeug (1) nach einem der vorhergehenden Ansprüche, wobei in dem zweiten Kühlkreislauf (9) zusätzlich eine zweite Traktionsmaschine (23), ein Getriebe (24) sowie eine Leistungselektronik (25) angeordnet sind, wobei über das Getriebe (24) ein serieller Betrieb, ein paralleler Betrieb und ein rein elektrischer Betrieb des Kraftfahrzeugs (1) realisierbar ist; wobei in dem seriellen Betrieb die Antriebsachse (3) nur mit der ersten Traktionsmaschine (5) drehmomentübertragend verbunden ist und die Verbrennungskraftmaschine (4) die zweite Traktionsmaschine (23) im Generatorbetrieb betreibt; wobei in dem parallelen Betrieb beide Traktionsmaschinen (5, 23) und die Verbrennungskraftmaschine (4) mit der Antriebsachse (3) drehmomentübertragend verbunden sind; wobei in dem rein elektrischen Betrieb die Antriebsachse (3) nur mit der ersten Traktionsmaschine (5) drehmomentübertragend verbunden ist und die Verbrennungskraftmaschine (4) und die zweite Traktionsmaschine (23) stillstehen.

5. Kraftfahrzeug (1) nach einem der vorhergehenden Ansprüche, wobei in dem zweiten Kühlkreislauf (9) zusätzlich ein Ladeluftkühler (31) angeordnet ist.

6. Kraftfahrzeug (1) nach einem der vorhergehenden Ansprüche, wobei in dem dritten Kühlkreislauf (11) zusätzlich ein DC-DC-Wandler (26) stromabwärts der Traktionsbatterie (6) angeordnet ist.

7. Kraftfahrzeug (1) nach einem der vorhergehenden Ansprüche, wobei der erste Kühlkreislauf (7) zusätzlich zu der ersten Pumpe (8) eine elektrisch betriebene vierte Pumpe (51) aufweist.

8. Kraftfahrzeug (1) nach einem der vorhergehenden Ansprüche, wobei in dem dritten Kühlkreislauf (11) ein über ein 3-2-Wege-Ventil (29) zuschaltbarer Chiller (30) angeordnet ist.

9. Kraftfahrzeug (1) nach einem der vorhergehenden Ansprüche, wobei der zweite Kühlkreislauf (9) ausschließlich über die zweite Rücklauflaufleitung (20) mit dem Kühlmittel (13) befüllbar ist und der erste Kühlkreislauf (7) und der zweite Kühlkreislauf (9) ausschließlich über die zweite Rücklaufleitung (20) strömungstechnisch miteinander verbunden sind.

10. Kraftfahrzeug (1) nach einem der vorhergehenden Ansprüche, wobei das Kühlsystem (2) bis auf ein 3-2-Wege-Ventil (29) im dritten Kühlkreislauf (11) frei von Rückschlagventilen und anderen Ventilen ist.
